# EUROPÄISCHE PATENTSCHRIFT

(11) **EP 0 944 781 B1**
(45) Veröffentlichungstag und Bekanntmachung des Hinweises auf die Patenterteilung: **27.03.2002**
(21) Anmeldenummer: 97910248.0
(22) Anmeldetag: 01.10.1997
(51) Int. Cl.: F16D 65/16

(54) **ELEKTROMECHANISCH BETÄTIGBARE BREMSE**
ELECTROMECHANICAL BRAKE
FREIN ELECTROMECANIQUE

(30) Priorität: 16.12.1996 DE 19652229
(43) Veröffentlichungstag der Anmeldung: 29.09.1999
(73) Patentinhaber: ROBERT BOSCH GMBH, 70442 Stuttgart (DE)
(72) Erfinder: SCHUMANN, Frank, D-74357 Bönnigheim (DE)
(86) Internationale Anmeldenummer: DE9702258
(87) Internationale Veröffentlichungsnummer: WO9827356

(56) Entgegenhaltungen:
- WO-A-96/03301
- DE-A- 19 508 253
- GB-A- 2 190 441
- PATENT ABSTRACTS OF JAPAN vol. 018, no. 147 (M-1575), 11.März 1994 & JP 05 321961 A (TOYOTA MOTOR CORP), 7.Dezember 1993,

## Beschreibung

### Stand der Technik

Die Erfindung betrifft eine elektromechanisch betätigbare Bremse gemäß dem Oberbegriff des Patentanspruchs 1.

Aus GB-A-2 190 441 ist eine derartige elektromechanisch betätigbare Bremse mit einer zweiteiligen Betätigungseinrichtung bekannt, nämlich einem ersten Teil zum Überwinden des Lüftspiels und einem zweiten Teil zum Andrücken eines Bremsbelags an einen Bremskörper. Beide Teile der Betätigungseinrichtung weisen jeweils einen durch einen eigenen elektrischen Betätigungsmotor antreibbaren Spindeltrieb auf. Die beiden Teile der Betätigungseinrichtung sind simultan oder aufeinanderfolgend durch Inbetriebnahme der beiden Motoren antreibbar, um eine Bremsbetätigung auszuführen. Beide Teile der Betätigungseinrichtung sind durch eine als Hebelpaar ausgebildete, blockierbare Abstützung miteinander verbunden. Das Hebelpaar ist um eine feststehende Achse schwenkbar gelagert. Der erste Teil der Betätigungseinrichtung greift mit geringem Abstand zur Achse, der zweite Teil der Betätigungseinrichtung mit großem Abstand zur Achse an dem Hebelpaar an. Aufgrund dieser Anordnung vermag der unmittelbar auf den Bremsbelag einwirkende erste Teil der Betätigungseinrichtung das Lüftspiel schnell zu überwinden, der zweite Teil der Betätigungseinrichtung über das Hebelpaar und den ersten Teil der Betätigungseinrichtung eine hohe Andruckkraft auf den Bremsbelag zu erzeugen. Beide Motoren der Betätigungseinrichtung können mit einer Bremse ausgerüstet sein. Damit kann ein unbeabsichtigtes Verstellen der Bremse bei Bremsungen mit gleichbleibender Bremskraft bei abgeschalteten Motoren vermieden werden.

Die bekannte Bremse ist insbesondere für den Einsatz in Schienenfahrzeugen vorgesehen. Dort steht der erforderliche Einbauraum für die beiden Teile der Betätigungseinrichtung und das relativ großvolumige Hebelpaar zur Verfügung. Für die Anordnung in der Felgenschüssel eines Straßenfahrzeugs dürfte die Bremse aufgrund von Gewicht und Volumen ungeeignet sein. Außerdem ist die Bremse aufgrund der beiden Motoren kostenaufwendig und erfordert einen erhöhten Steuerungsaufwand. So ist die Abstützung nur dann blockiert, wenn bei aufeinanderfolgendem Antrieb der beiden Teile der Betätigungseinrichtung der dem Andrücken des Bremsbelags dienende Teil nicht angetrieben wird, also nur das Lüftspiel überwunden wird. Bei simultanem Antrieb beider Teile der Betätigungseinrichtung ist die Abstützung dagegen nicht blockiert. Die Abstützung ist durch Schwenken des Hebelpaars um die feststehende Achse lösbar. Das Schwenken des Hebelpaars erfolgt durch Antrieb des Motors des dem Andrücken des Bremsbelags dienenden Teils der Betätigungseinrichtung. Bei Ausfall eines Motors oder beider Motoren der Betätigungseinrichtung können Probleme auftreten, die betätigte Bremse zu lösen.

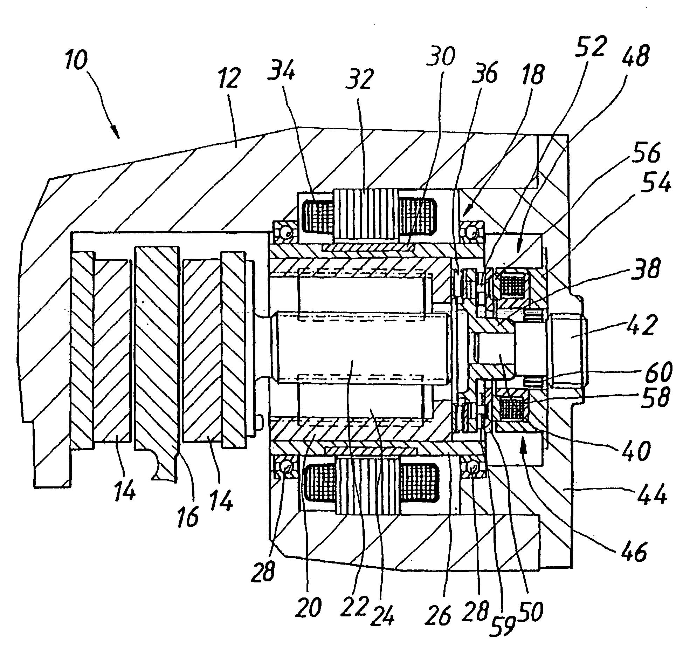

Außerdem ist aus WO 96/03301, Figur 2 eine Bremse zum Andrücken eines Bremsbelags an einen rotierenden Bremskörper (Bremsscheibe, Bremstrommel oder dergleichen) bekannt, welche eine Betätigungseinrichtung mit einem Rollengewindetrieb aufweist, der von einem Elektromotor antreibbar ist. Sowohl Zuspannen als auch Lösen der bekannten Bremse werden mit dem Elektromotor bewerkstelligt. Um zu verhindern, daß im Fehlerfall, beispielsweise bei einem Ausfall einer Steuerelektronik der Bremse während einer Bremsung, durch Hysterese der Betätigungseinheit verursachte Restbremsmomente am Bremskörper wirken, ist bei einer Ausgestaltung der bekannten Bremse eine vorzugsweise spiralförmige Rückstellfeder vorgesehen, die an der Betätigungseinheit angreift und diese zusammen mit dem Elektromotor rotierend in Löserichtung antreibt, so daß der Bremsbelag vom Bremskörper abgehoben wird.

Diese Bremse hat den Nachteil, daß beim Bremskraftaufbau zusätzlich die Kraft die Rückstellfeder überwunden werden muß, wozu der Elektromotor entsprechend größer dimensioniert und stärker bestromt werden muß. Hinzu kommt ein Dynamikverlust und die Verschlechterung des Wirkungsgrades.

Weiterer Nachteil ist, daß zum Konstanthalten einer aufgebauten Bremskraft der Elektromotor so stark bestromt werden muß, daß er den Bremsbelag gegen die Kraft der Rückstellfeder mit konstanter Andruckkraft am Bremskörper angedrückt hält, was thermische Probleme mit sich bringt. Hinzu kommt, daß die bekannte Bremse sich nicht als Feststellbremse verwenden läßt, da sie sich löst, wenn sie unbestromt ist. Zusätzlicher Nachteil ist, daß die Bremse bei verklemmtem Rollengewindetrieb nicht gelöst werden kann.

Weiterer Nachteil ist, daß sich ein Lüftspiel, also ein Abstand zwischen Bremsbelag und Bremskörper bei gelöster Bremse, mit zunehmender Abnutzung der Bremsbeläge vergrößert. Dadurch wird zum einen ein Zustellweg des Bremsbelags bis zur Anlage am Bremskörper größer, es dauert also länger, bis die Bremse greift. Der Dynamikverlust vergrößert sich zusätzlich. Des weiteren vergrößert sich die zur Überwindung der Kraft der Rückstellfeder notwendige Kraft, da die Rückstellfeder stärker verformt wird. Die zur Verformung der Rückstellfeder vom Elektromotor der Betätigungseinrichtung aufzubringende Energie entspricht dem Produkt aus Verformungsweg und Verformungskraft, steigt also mit zunehmendem Lüftspiel zumindest quadratisch an, was den Wirkungsgrad der Bremse bei Abnutzung der Bremsbeläge ganz erheblich verschlechtert.

### Vorteile der Erfindung

Die erfindungsgemäße, elektromechanisch betätigbare Bremse mit den Merkmalen des Anspruchs 1 weist eine durch Drehen lösbare Abstützung auf, die mit einer Blockiereinrichtung gegen Verdrehen blockiert ist. Die Abstützung kann beispielsweise nach Art eines Bajonettverschlusses ausgebildet sein, die durch Verdrehen um einen kleinen Winkel lösbar und in axialer Richtung vom Bremskörper weg verschiebbar ist. Eine andere Möglichkeit ist eine ein Schraubgewinde aufweisende Abstützung, die sich durch Verdrehen vom Bremskörper wegbewegen läßt und die mit der Blockiereinrichtung gegen Verdrehen blockiert ist. Dabei kann ein über weniger als eine volle Umdrehung reichendes Schraubgewinde ausreichend sein.

Gegen die Abstützung stützt sich die Betätigungseinrichtung beim Betätigen der Bremse, also zum Andrücken des Bremsbelags an den Bremskörper, ab. Beim Bremsen und beim Lösen der Bremse wirkt die Abstützung als feststehendes Widerlager für die Betätigungseinrichtung, hat ansonsten aber keine Funktion. Die Bremse wird mit der Betätigungseinrichtung betätigt und gelöst. Die Abstützung beeinflußt also weder die Betätigungseinrichtung selbst noch deren Wirkungsgrad.

Läßt sich im Fehlerfall, beispielsweise bei Ausfall der Stromversorgung des Elektromotors oder seiner Steuerelektronik, oder bei Verklemmen oder Schwergängigkeit eines Spindeltriebs der Betätigungseinrichtung die Bremse nicht mit der Betätigungseinrichtung lösen, wird die Blockierung der Abstützung gelöst, so daß diese frei drehbar ist. Das Drehen der Abstützung kann durch eine Reaktionskraft, mit der der gegen den Bremskörper gedrückte Bremsbelag auf die Betätigungseinrichtung einwirkt, erfolgen, sofern die Abstützung selbsthemmungsfrei ausgebildet ist. Das Drehen der Abstützung kann auch mittels eines vorgespannten Federelementes erfolgen, das die Abstützung bei gelöster Blockiereinrichtung in Löserichtung verdreht. Mit dem Lösen entfernt sich die Abstützung vom Bremskörper oder wird, wenn sie nach Art eines Bajonettverschlusses ausgebildet ist, frei vom Bremskörper weg verschiebbar, so daß sich auch die Betätigungseinrichtung mitsamt des Bremsbelags vom Bremskörper löst. Mit anderen Worten, es wird die als Widerlager für die Betätigungseinrichtung dienende Abstützung entfernt oder zumindest ihr Abstand vom Bremskörper vergrößert. Die Erfindung hat den Vorteil, daß ihre Abstützung die Funktion der Betätigungseinrichtung nicht beeinflußt und deren Wirkungsgrad nicht verschlechtert.

Durch Vorsehen eines vorgespannten Federelements, das die Abstützung bei gelöster Blockiereinrichtung dreht und dadurch löst, werden die Bremsbeläge vom Bremskörper abgehoben. Es wird vermieden, daß im Fehlerfall ein Restbremsmoment wirkt, vollständiges Lösen der Bremse ist sichergestellt. Die Verfügbarkeit eines mit der erfindungsgemäßen Bremse ausgerüsteten Fahrzeugs ist erhöht. Des weiteren läßt sich die erfindungsgemäße Bremse als eine ein Bremsmoment ohne Bestromung aufrechterhaltende Feststellbremse verwenden. Die erfindungsgemäße Bremse hat den Vorteil einer optimalen Nutzung der in ihr gespeicherten Energie durch die konstruktiver Ausführung ihrer lösbaren Abstützung. Deren Schreubgewinde ist auf optimales Rückdrehmoment ausgelegt, d. h. die Zuspannkraft der Bremse wird im Fehlerfall bei Lösen der Bremse selbständig auf Null abgebaut. Dadurch werden weniger Baukomponenten für das Lösen der Bremse im Fehlerfall benötigt, was Vorteile bezüblich Bauraum, Gewicht, Kosten und Leistungselektronik zur Folge hat.

Die Unteransprüche haben vorteilhafte Ausgestaltungen und Weiterbildungen der im Anspruch 1 angegebenen Erfindung zum Gegenstand.

### Zeichnung

Die Erfindung wird nachfolgend anhand eines in der Zeichnung dargestellten Ausführungsbeispiels näher erläutert. Die einzige Figur zeigt einen Schnitt durch eine erfindungsgemäße Bremse.

### Beschreibung des Ausführungsbeispiels

Die in der Zeichnung dargestellte, erfindungsgemäße Bremse ist als Scheibenbremse 10 mit einem sog. Schwimm- oder Faustsattel 12 ausgebildet, in dem zwei Bremsbeläge 14 beiderseits einer zwischen ihnen rotierbaren Bremsscheibe 16 angeordnet sind.

Als Betätigungseinrichtung weist die Scheibenbremse 10 einen Spindeltrieb, und zwar wegen des guten Wirkungsgrades einen Rollengewindetrieb 18 auf. Ein Spindeltrieb hat den Vorteil, daß sich ein stets gleiches Lüftspiel zwischen den Bremsbelägen 14 und der Bremsscheibe 16 unabhängig von einer Abnutzung der Bremsbeläge 14 einstellen läßt. Dies hat den Vorteil, daß sich ein Zustellweg und eine Zustellzeit, bis die Bremsbeläge 14 beim Betätigen der Scheibenbremse 10 an der Bremsscheibe 16 zur Anlage kommen, nicht mit der Abnutzung der Bremsbeläge 14 verlängert.

Der Rollengewindetrieb 18 umfaßt eine Mutter 20, welche eine Spindel 22 koaxial umgibt. In einem zylindrischen Zwischenraum zwischen Mutter 20 und Spindel 22 sind über den Umfang verteilt Gewinderollen 24 angeordnet, deren Gewinde sowohl in das Muttergewinde als auch in das Spindelgewinde eingreifen. Bei rotierendem Antrieb der Mutter 20 laufen die Gewinderollen 24 wie die Planetenräder eines Planetengetriebes um die Spindel 22 um und bewirken eine Axialbewegung der Spindel 22. An einem Stirnende der Spindel 22 ist einer der beiden Bremsbeläge 14 verdrehsicher angeordnet, er läßt sich zum Aufbringen einer Bremskraft durch rotierenden Antrieb der Mutter 20 gegen eine Seite der Bremsscheibe 16 drücken. Der andere der beiden Bremsbeläge 14 wird dabei in an sich bekannter Weise infolge der Reaktionskraft vom Bremssattel 12 gegen die andere Seite der Bremsscheibe 16 gedrückt. Zum Lösen der Bremse 10 wird die Mutter 20 des Rollengewindetriebs 18 in entgegengesetzter Richtung rotierend angetrieben.

Zum rotierenden Antrieb weist die Mutter 20 ein Polygonprofil an ihrem Außenumfang auf, auf das eine Polygonmuffe 26, deren Innenseite ein komplementäres Polygonprofil aufweist, aufgeschoben ist. Das Polygonprofil kann beispielsweise als Querschnitt ein Quadrat aufweisen, dessen Ecken von einen konzentrischen Kreis abgeschnitten sind, wie es aus der DIN 32 712 bekannt ist. Ein Polygonprofil eignet sich besonders für die drehfeste Verbindung der Mutter 20 des Rollengewindetriebs 18 mit der Polygonmuffe 26, die unter Belastung mit einem Drehmoment gegeneinander längsverschiebbar sein sollen. Die beiden Polygonprofile haben eine Spielpassung zueinander, d. h. die Mutter 20 ist in axialer Richtung gegenüber der Polygonmuffe 26 verschiebbar und drehfest mit dieser verbunden. Die Polygonmuffe 26 ist mit zwei Kugellagern 28 drehbar im Schwimmsattel 12 gelagert.

In einen Außenumfang der Polygonmuffe 26 sind Permanentmagnete 30 eingesetzt, die Polygonmuffe 26 bildet einen Rotor eines Elektro-Betätigungsmotors, der erfindungsgemäßen Bremse 10. Ein Blechpakete 32 und Statorwicklungen 34 aufweisender Stator umgibt die den Rotor bildende Polygonmuffe 26. Der Stator 32, 34 ist fest in den Schwimmsattel 12 eingesetzt. Durch Einschalten des Betätigungsmotors 26, 30, 32, 34 wird die mit der den Rotor des Betätigungsmotors bildenden Polygonmuffe 26 drehfest verbundene Mutter 20 des Rollengewindetriebs 18 in Rotation versetzt und dadurch die Spindel 22 axial verschoben und die erfindungsgemäße Bremse 10 wie oben beschrieben je nach Drehrichtung betätigt oder gelöst.

In axialer Richtung stützt sich die Mutter 20 des Spindeltriebs 18 über ein Nadellager 36 gegen eine scheibenförmige Flanschnabe 38 ab, die auf einen Zapfen 40 kraft- und momentenübertragend aufgepreßt ist, der einstückig mit einer zweiten Spindel 42 ist. Die zweite Spindel 42 ist in ein Innengewinde eines mit dem Schwimmsattel 12 verschraubten Deckels 44 eingeschraubt, der eine Spindelmutter für die zweite Spindel 42 bildet. Diese Spindel/Spindelmutter-Anordnung 42, 44 bildet eine durch Drehen lösbare Abstützung für die Mutter 20 des Rollengewindetriebs 18 der Betätigungseinrichtung. Die Abstützung 38, 42, 44 ist durch die Steigung ihres Schraubgewindes und aufgrund des Durchmessers ihrer Spindel 42 selbsthemmungsfrei.

Die erfindungsgemäße Bremse 10 weist eine Blockiereinrichtung 46 auf, welche die Abstützung 38, 42, 44 gegen Verdrehen blockiert. Als Blockiereinrichtung können beispielsweise eine elektromagnetische, vorzugsweise stromlos geschlossene Federdruckbremse oder ein schaltbarer Freilauf Verwendung finden. Im dargestellten Ausführungsbeispiel umfaßt die Blockiereinrichtung 46 eine Permanentmagnet-Bremse 48 mit einer Ankerscheibe 50, die auf einer dem Rollengewindetrieb 18 abgewandten Seite der Flanschnabe 38 angeordnet ist. Über in die Flanschnabe 38 eingesetzte Bolzen 52 sind die Flanschnabe 38 und die Ankerscheibe 50 drehfest miteinander verbunden. Ein ringförmiger Permanentmagnet 54, der fest auf einer Innenseite des Deckels 44 angebracht ist, zieht die Ankerscheibe 50 gegen einen ringscheibenförmigen Reibbelag 56, der in die der Ankerscheibe 50 zugewandte Stirnseite des Permanentmagneten 54 eingesetzt ist. Auf diese Weise ist die die Abstützung für die Mutter 20 des Rollengewindetriebs 18 bildende Flanschnabe 38 gegen Verdrehen blockiert, sie bildet ein Widerlager, gegen das sich die Mutter 20 des Rollengewindetriebs 18 beim Andrücken des Bremsbelags 14 an die Bremsscheibe 16 abstützt.

In den ringförmigen Permanentmagneten 54 der Permanentmagnet-Bremse 48 ist ein Elektromagnet 58 eingesetzt. Durch Bestromen mit Gleichstrom baut der Elektromagnet 58 ein Magnetfeld auf, das dem Magnetfeld des Permanentmagneten 54 entgegengerichtet ist und dieses näherungsweise aufhebt. Eine zwischen die Flanschnabe 38 und die Ankerscheibe 50 eingelegte, ringscheibenförmige, vorgespannte Membranfeder 59 hebt durch ihre Zugkraft die Ankerscheibe 50 vom Reibbelag 56 ab, so daß die Permanentmagnet-Bremse 48 gelöst ist. Die Ankerscheibe 50 und mit ihr zusammen die die Abstützung bildende Flanschnabe 38 werden frei drehbar, d. h. die Blockierung der Abstützung ist aufgehoben. Der Elektromagnet 58 ist an eine von der Stromversorgung des Betätigungsmotors 26, 30, 32, 34 unabhängige Stromversorgung angeschlossen, um ein Lösen der Bremse 10 auch bei Ausfall der Stromversorgung des Betätigungsmotors 26, 30, 32, 34 sicherzustellen.

Bei betätigter Bremse 10 bewirkt eine Andruckkraft, mit der der an der Spindel 22 des Rollengewindetriebs 18 angebrachte Bremsbelag 14 gegen die Bremsscheibe 16 gedrückt wird, eine Reaktionskraft auf die Mutter 20 des Rollengewindetriebs 18 in entgegengesetzter Richtung, d. h. von der Bremsscheibe 16 weg. Diese Reaktionskraft bewirkt bei gelöster Permanentmagnet-Bremse 48 ein Verdrehen der Flanschnabe 38 zusammen mit der zweiten Spindel 42, die auf die Flanschnabe 38 aufgepreßt ist und die selbsthemmungsfrei in den Deckel 44 des Schwimmsattels 12 eingeschraubt ist. Diese Drehung bewirkt, daß sich die zweite Spindel 42 und mit ihr zusammen die Flanschnabe 38 sowie die Mutter 20 zusammen mit den Gewinderollen 24 und der Spindel 22 des Rollengewindetriebs 18 in axialer Richtung von der Bremsscheibe 16 entfernen, bis die Bremsbeläge 14 frei sind oder nur noch mit einer geringen Andruckkraft an der Bremsscheibe 16 anliegen, die nicht ausreicht, die zweite Spindel 42 weiterzubewegen. Diese geringe Andruckkraft bewirkt ein geringes und akzeptables Restbremsmoment der erfindungsgemäßen Bremse 10. Die erfindungsgemäße Bremse 10 läßt sich also im Fehlerfall, d. h. bei Ausfall ihres Betätigungsmotors 26, 30, 32, 34 oder Klemmen des Rollengewindetriebs 18 durch Lösen der Permanentmagnet-Bremse 48 lösen.

Um die Bremsbeläge 14 im Fehlerfall von der Bremsscheibe 16 abzuheben, so daß kein Restbremsmoment an der Bremse 10 wirkt, kann diese ein vorgespanntes Federelement in Form einer Blatt-Spiralfeder 60 oder Drehfeder aufweisen, die die zweite Spindel 42 umgibt und an dieser angreift und sich gegen den Deckel 44 abstützt. Diese vorgespannte Spiralfeder 48 verdreht die zweite Spindel 42 nach Lösen der Permanentmagnet-Bremse 48 so, daß sich die zweite Spindel 42 mit der Flanschnabe 38 von der Bremsscheibe 16 wegbewegt. Über die Mutter 20, die Gewinderollen 24 und die Spindel 22 des Rollengewindetriebs 18 wird der Bremsbelag 14 von der Bremsscheibe 16 abgehoben. Bei dieser Ausgestaltung der Erfindung muß die zweite Spindel 42 nicht selbsthemmungsfrei ausgebildet sein. Das vorgespannte Federelement stellt das gesamte Rückdrehmoment für die lösbare Abstützung 38, 42 bereit. Es kompensiert Rückdrehmomentschwankungen infolge von Schwankungen des Reibungskoeffizienten, Temperatureinflüssen etc. Darüber hinaus minimiert es das mit der Permanentmagnet-Bremse 48 zu haltende Rückdrehmoment, hat also unterstützende Wirkung.

## Patentansprüche

1. Elektromechanisch betätigbare Bremse (10) mit einer einen elektrischen Betätigungsmotor (26, 30, 32, 34) für einen Spindeltrieb (20, 22, 24), eine Abstützung (38, 42, 44) für den Spindeltrieb (20, 22, 24) sowie eine lösbare Blockiereinrichtung (46) für die Abstützung (38, 42, 44) aufweisende Betätigungseinrichtung (18), mit der ein Bremsbelag (14) zum Aufbringen einer Bremskraft an einen zu bremsenden Bremskörper (16) andrückbar und zum Einstellen eines Lüftspiels wieder von ihm abhebbar ist,
**gekennzeichnet durch** die weiteren Merkmale:
- mit dem elektrischen Betätigungsmotor (26, 30, 32, 34) der Bremse (10) ist sowohl die Bremskraft aufbringbar als auch das Lüftspiel einstellbar,
- die Abstützung (38, 42, 44) ist achsgleich zum Spindeltrieb (20, 22, 24) der Betätigungseinrichtung (18) in der Bremse (10) gelagert und **durch** Drehen und axiales Verschieben lösbar,
- an der Abstützung (38, 42, 44) ist eine drehbare Mutter (20) des Spindeltriebs (20, 22, 24) der Betätigungseinrichtung (18) zumindest beim Andrücken des Bremsbelags (14) an den Bremskörper (16) abgestützt,
- bei fehlerfrei arbeitender Bremse (10) ist die Abstützung (38, 42, 44) sowohl beim Aufbringen der Bremskraft als auch beim Einstellen des Lüftspiels mit der Blockiereinrichtung (46) blockiert,
- bei fehlerhaft arbeitender Bremse (10) läßt die Blockiereinrichtung (46) ein vom elektrischen Betätigungsmotor (26, 30, 32, 34) unabhängiges Drehen und axiales Verschieben der Abstützung (38, 42, 44) zu, so daß der Bremsbelag (14) von dem Bremskörper (16) lösbar ist.

2. Bremse nach Anspruch 1, **dadurch gekennzeichnet, daß** die lösbare Abstützung (38, 42) eine Spindel (42) und eine Spindelmutter (42) aufweist.

3. Bremse nach Anspruch 2, **dadurch gekennzeichnet, daß** die Abstützung (38, 42) selbsthemmungsfrei ist.

4. Bremse nach Anspruch 1, **dadurch gekennzeichnet, daß** die lösbare Abstützung (38, 42) ein vorgespanntes Federelement (60) aufweist, welches die Abstützung (38, 42) bei gelöster Blockiereinrichtung (46) dreht und dadurch löst.

5. Bremse nach Anspruch 4, **dadurch gekennzeichnet, daß** das Federelement eine Spiralfeder (60) oder Drehfeder ist.

6. Bremse nach Anspruch 1, **dadurch gekennzeichnet, daß** die Blockiereinrichtung (46) als Bremse (48) ausgebildet ist.

7. Bremse nach Anspruch 6, **dadurch gekennzeichnet, daß** die Bremse (48) eine stabile Bremsstellung aufweist.

8. Bremse nach Anspruch 7, **dadurch gekennzeichnet, daß** die Bremse (48) magnetisch lösbar ist.

9. Bremse nach Anspruch 1, **dadurch gekennzeichnet, daß** die Betätigungseinrichtung einen Spindeltrieb (18) aufweist, dessen Mutter (20) drehfest und axial verschiebbar mit einem Übertragungselement (26) verbunden ist, das mit dem Betätigungsmotor (26, 30, 32, 34) rotierend antreibbar ist.

10. Bremse nach Anspruch 9, **dadurch gekennzeichnet, daß** das Übertragungselement eine Polygonmuffe (26) mit einem Innen-Polygonprofil ist, die drehfest mit einem komplementären Außen-Polygonprofil der Mutter (20) des Spindeltriebs (18) in Eingriff steht.

11. Bremse nach Anspruch 10, **dadurch gekennzeichnet, daß** die Polygonmuffe (26) einen Rotor des Betätigungsmotors (26, 30, 32, 34) bildet.

## Claims

1. Electromechanically actuable brake (10), with an actuating device (18) which has an electric actuating motor (26, 30, 32, 34) for a spindle drive (20, 22, 24), a support (38, 42, 44) for the spindle drive (20, 22, 24) and a releasable locking device (46) for the support (38, 42, 44) and by means of which a brake lining (14) can be pressed onto a brake body (16) to be braked in order to apply a brake force and can be lifted off from said brake body again in order to set a lifting clearance, **characterized by** the further features:
- both the brake force can be applied and the lifting clearance can be set by means of the electric actuating motor (26, 30, 32, 34) of the brake (10),
- the support (38, 42, 44) is mounted in the brake (10) coaxially with the spindle drive (20, 22, 24) of the actuating device (18) and can be released by rotation and axial displacement,
- a rotatable nut (20) of the spindle drive (20, 22, 24) of the actuating device (18) is supported on the support (38, 42, 44) at least when the brake lining (14) is pressed onto the brake body (16),
- when the brake (10) is operating in a fault-free manner the support (38, 42, 44) is locked by means of the locking device (46) both when the brake force is applied and when the lifting clearance is set,
- when the brake (10) is operating in a fault-free manner the locking device (46) allows the support (38, 42, 44) to be rotated and axially displaced independently of the electric actuating motor (26, 30, 32, 34), so that the brake lining (14) can be released from the brake body (16).

2. Brake according to Claim 1, **characterized in that** the releasable support (38, 42) has a spindle (38) and a spindle nut (42).

3. Brake according to Claim 2, **characterized in that** the support (38, 42) is free of self-locking.

4. Brake according to Claim 1, **characterized in that** the releasable support (38, 42) has a prestressed spring element (60) which, with the locking device (46) released, rotates and thereby releases the support (38, 42).

5. Brake according to Claim 4, **characterized in that** the spring element is a helical spring (60) or torsion spring.

6. Brake according to Claim 1, **characterized in that** the locking device (46) is designed as a brake (48).

7. Brake according to Claim 6, **characterized in that** the brake (48) has a stable braking position.

8. Brake according to Claim 7, **characterized in that** the brake (48) can be released magnetically.

9. Brake according to Claim 1, **characterized in that** the actuating device has a spindle drive (18), the nut (20) of which is connected fixedly in terms of rotation and axially displaceably to a transmission element (26) which can be driven in rotation by means of the actuating motor (26, 30, 32, 34).

10. Brake according to Claim 9, **characterized in that** the transmission element is a polygonal sleeve (26) with an inner polygonal profile, said sleeve being in engagement fixedly in terms of rotation with a complementary outer polygonal profile of the nut (20) of the spindle drive (18).

11. Brake according to Claim 10, **characterized in that** the polygonal sleeve (26) forms a rotor of the actuating motor (26, 30, 32, 34).

## Revendications

1. Frein électromécanique (10) avec une installation d'actionnement (18) comprenant un moteur d'actionnement électrique (26, 30, 32, 34) pour un entraînement à vis (20, 22, 24), un appui (38, 42, 44) pour l'entraînement à vis (20, 22, 24) ainsi qu'une installation de blocage (46) susceptible d'être ouverte, pour
l'appui (38, 42, 44), et permettant de comprimer une garniture de frein (14) pour appliquer une force de freinage par poussée contre un corps de frein (16) à freiner et de la soulever de nouveau par rapport à celui-ci pour créer un intervalle d'air,
**caractérisé en ce que**
- le moteur d'actionnement électrique (26, 30, 32, 34) applique la force de freinage du frein (10) et règle l'intervalle d'air,
- l'appui (38, 42, 44) est coaxial à l'entraînement à vis (20, 22, 24) de l'installation d'actionnement (18) du frein (10) et peut se détacher par rotation et coulissement axial,
- l'appui (38, 42, 44) comporte un écrou rotatif (20) de la transmission à vis (20, 22, 24) de l'installation d'actionnement (18) qui est soutenu au moins pendant que la garniture de frein (14) est pressée contre le corps de frein (16),
- en cas de frein (10) à fonctionnement défectueux, l'appui (38, 42, 44) est bloqué par l'installation de blocage (46) à la fois lorsqu'on applique la force de freinage et lors du réglage de l'intervalle d'air, et
- en cas de frein à fonctionnement défectueux (10), l'installation de blocage (46) autorise indépendamment du moteur d'actionnement (26, 30, 32, 34) une rotation et un coulissement axial de l'appui (38, 42, 44) pour que la garniture de frein (14) puisse se détacher du corps de frein (16).

2. Frein selon la revendication 1,
**caractérisé en ce que**
l'appui détachable (38, 42) comporte une vis (42) et un écrou à vis (44).

3. Frein selon la revendication 2,
**caractérisé en ce que**
l'appui (38, 42) n'est pas autobloquant.

4. Frein selon la revendication 1,
**caractérisé en ce que**
l'appui détachable (38, 42) comporte un élément de ressort précontraint (60) qui tourne l'appui (38, 42) en cas d'installation de blocage (46) ouverte et desserre ainsi l'appui.

5. Frein selon la revendication 4,
**caractérisé en ce que**
l'élément à ressort est un ressort spiral (60) ou un ressort de rotation.

6. Frein selon la revendication 1,
**caractérisé en ce que**
l'installation de blocage (46) est réalisée comme frein (48).

7. Frein selon la revendication 6,
**caractérisé en ce que**
le frein (48) présente une position instable.

8. Frein selon la revendication 7,
**caractérisé en ce que**
le frein (48) se desserre magnétiquement.

9. Frein selon la revendication 1,
**caractérisé en ce que**
l'installation d'actionnement comporte une transmission à vis (18) dont l'écrou (20) est relié à un élément de transmission (26) solidairement en rotation et coulissant axialement, cet élément de transmission étant entraîné en rotation par le moteur d'actionnement (26, 30, 32, 34).

10. Frein selon la revendication 9,
**caractérisé en ce que**
l'élément de transmission est un manchon polygonal (26) avec un profil polygonal intérieur en prise solidairement en rotation avec un profil polygonal extérieur complémentaire de l'écrou (20) de l'entraînement à vis (18).

11. Frein selon la revendication 10,
**caractérisé en ce que**
le manchon polygonal (26) forme un rotor d'un moteur d'actionnement (26, 30, 32, 34).
